# EUROPEAN PATENT APPLICATION

(11) **EP 2 573 616 A2**
(43) Date of publication of application: **27.03.2013**
(21) Application number: 12184558.0
(22) Date of filing: 14.09.2012
(51) Int. Cl.: G02F 1/13357, G02B 6/00, F21V 8/00

(54) **Mechanical fastening and electical connector for a printed circuit board in the LED-backlight of a liquid crystal display**

(30) Priority: 22.09.2011 KR 20110095864
(71) Applicant: Samsung Electronics Co., Ltd., Suwon-si, Gyeonggi-do, 443-742 (KR)
(72) Inventor: Seo, Jeong Phil, Korea (KR); Kwon, Yong Hun, Korea (KR); Hur, Gil Tae, Gwanak-gu, Seoul (KR); Choi, Suk Ju, Korea (KR); Lee, Young Min, Korea (KR); Lee, Kye Hoon, Korea (KR); Cho, Kun Ho, Korea (KR)
(74) Representative: Tindall, Adam

(57) **Abstract**

In the backlight of a liquid crystal display module (100), a printed circuit board (262), on which an LED source (26) is mounted, is mechanically fixed to the rear frame (50) of the module by a screw (60) passing through a hole (262a) in the board. The screw is countersunk into a recess (262b) in the PCB so that its head (61) does not protrude from the surface of the board. In addition, an electrical connector (70) may be arranged to connect one of the edges of the PCB (262) in such a way that the connector fits into another recess (262c) of the PCB, without any portion of it protruding above the surface of the board. As a result, the PCB can easily support a light guide member (24) directly.

## Description

The present disclosure relates to a display module having a liquid crystal display panel at which an image is being displayed and a backlight unit configured to emit light to the liquid crystal display panel.

### Description of the Related Art

In general, a display module is an apparatus having a display panel at which an image is being displayed, and, in particular, a display module using a liquid crystal display panel is widely being used. A liquid crystal display panel is configured to optically display an image by sealing liquid crystal in between two transparent substrates and by changing an optical transmissivity as a voltage is applied, to change a direction of a liquid crystal molecule. A rear of a liquid crystal display panel is provided with a backlight unit that is configured to emit a light to the liquid crystal display panel.

The backlight unit may include a light emitting diode used as a source of light, a printed circuit board at which a light emitting diode is installed, and a light guiding member disposed at a rear of a liquid crystal display panel and configured to guide the light generated at the light emitting diode to the liquid crystal display panel.

The printed circuit board may be provided with a fastening member, which is configured for the printed circuit board to be fixed to a rear sash that forms a rear surface of a display module, or a connector, which is configured for the printed circuit board to be connected to other components, and an installation comprising the fastening member or the connector which protrudes from the printed circuit board when installed on the printed circuit board, such that the printed circuit board is unable to directly support a structure, such as the light guiding member.

### Summary

The present disclosure provides a display module capable of preventing an installation from being installed in a protruded manner from a printed circuit board, and thereby solves the problem of the related art.

Additional aspects of exemplary embodiments will be set forth in part in the description which follows and, in part, will be obvious from the description, or may be learned by practice of the disclosure.

In accordance with one aspect of an exemplary embodiment, a display module comprises a printed circuit board, a light emitting diode and an installation. The light emitting diode may be disposed at one surface of the printed circuit board. The installation may be installed at the printed circuit board.

The printed circuit board may be provided with an accommodating groove in which at least one portion of the installation may be accommodated.

The installation may comprise a fastening member having a fastening portion, which is provided with a male screw formed thereto and a head portion configured to rotate the fastening portion. The printed circuit board may comprise a fastening hole at which the fastening portion is installed, and the accommodating groove may be provided at an adjacent area of the fastening hole in a concaved shape to accommodate the head portion.

The accommodating groove may be formed in a depth equal to or greater than a thickness of the head portion.

The installation may comprise a connector having a connecting portion that is to be connected to the printed circuit board, and the accommodating groove may be open to a lateral side of the printed circuit board so as to have the connecting portion installed thereon.

The accommodating groove may be formed in a depth equal to or greater than a thickness of the connecting portion.

The accommodating groove may be formed in an inclined manner to form a circuit that is connected to the connector.

The accommodating groove may be provided in a concaved manner at one surface of the printed circuit board at which the light emitting diode is disposed.

The printed circuit board may comprise a metal printed circuit board including a metallic material.

In accordance with another aspect of an exemplary embodiment, a display module comprises a liquid crystal display panel, a backlight unit, and a front sash and a rear sash. The backlight unit may be disposed at a rear side of the liquid crystal display panel. The front sash and the rear sash are disposed at a front side of the liquid crystal display panel and a rear side of the liquid crystal display panel, respectively. The backlight unit may comprise a light guiding member disposed at a rear side of the liquid crystal display panel, a plurality of light emitting diodes disposed while facing a side surface of the light guiding member, and a metal printed circuit board at which the plurality of light emitting diodes is disposed and which is fixed to the rear sash through a fastening member. The fastening member may comprise a fastening portion provided with a male screw and a head portion configured to rotate the fastening portion. The metal printed circuit board may comprise a first fastening hole, at which the fastening portion is fastened, and an accommodating groove provided at an adjacent area to the first fastening hole and provided in a depth equal to or greater than a thickness of the head portion so that the head portion is accommodated therein.

The display module may further comprise a reflection sheet disposed at a rear surface of the light guiding member. The light guiding member may be supported on the printed circuit board through the reflection sheet.

In accordance with another aspect of an exemplary embodiment, a display module comprises a liquid crystal display panel, and a backlight unit. The backlight unit may be disposed at a rear side of the liquid crystal display panel. The backlight unit may comprise a light guiding member disposed at a rear side of the liquid crystal display panel, a plurality of light emitting diodes disposed while facing a lateral side of the light guiding member, and a metal printed circuit board at which the plurality of light emitting diodes is disposed and which is provided at one side thereof with a connector installed for connection. The connector may comprise a connecting portion installed at the metal printed circuit board, and the metal printed circuit board may comprise an accommodating groove provided in a depth equal to or greater than a thickness of the connecting portion so that the connecting portion is accommodated therein.

In accordance with another exemplary embodiment, there is provided a display module, comprising: a printed circuit board having light emitting diodes on a front surface and comprising an accommodating groove which accommodates an installation; the installation installed at the printed circuit board, and a rear sash disposed at a rear side of the display module, wherein the installation connects the printed circuit board and the rear sash such that the installation is recessed from the front surface of the printed circuit board.

The installation may comprise a first portion and a second portion, the first portion being wider than the second portion, and the accommodating groove accommodating the first portion.

The accommodating groove may be formed in a depth equal to or greater than a thickness of the first portion.

As described above, the display module in accordance with one aspect of an exemplary embodiment is provided with the installation accommodated at the accommodating groove, and thereby the installation is not protruded from the printed circuit board.

In addition, the light guiding member may be configured to be directly supported on the printed circuit board through the reflection sheet.

### Brief Description of the Drawings

These and/or other aspects of exemplary embodiments will become apparent and more readily appreciated from the following description of the exemplary embodiments, taken in conjunction with the accompanying drawings of which:
FIG. 1 is an exploded perspective view of a display module according to an exemplary embodiment.

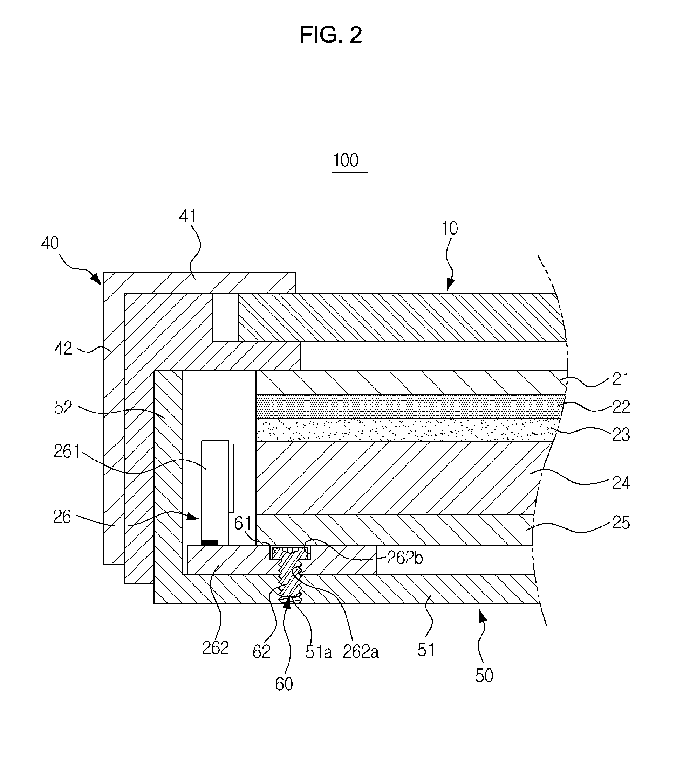

FIG. 2 is a cross-sectional view of the display module according to the exemplary embodiment.
FIG. 3 is a cross-sectional view of a display module according to another exemplary embodiment.

### Detailed Description

Reference will now be made in detail to the exemplary embodiments, examples of which are illustrated in the accompanying drawings, wherein like reference numerals refer to like elements throughout.

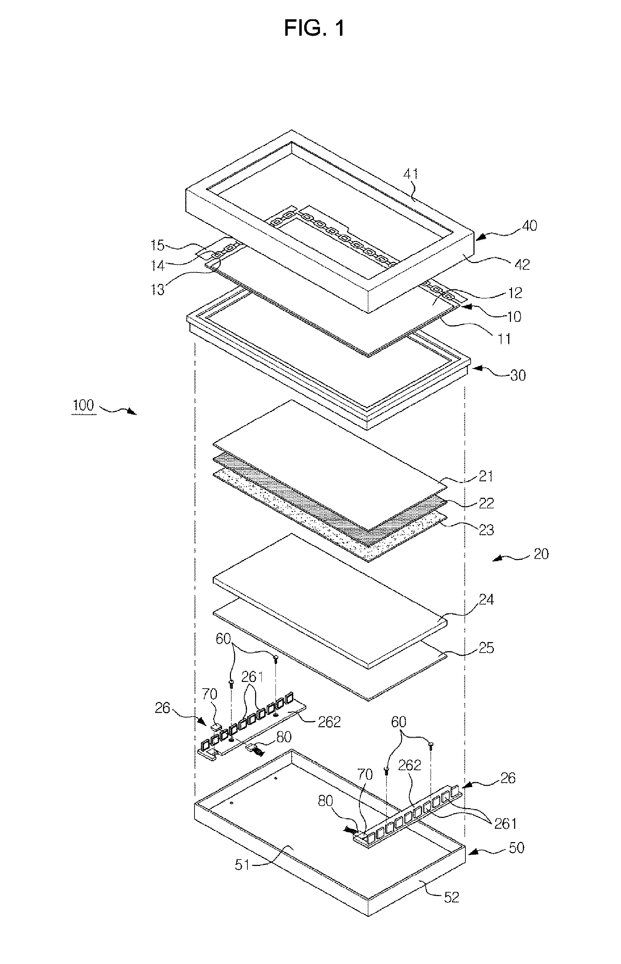

As illustrated in FIG. 1, a display module 100 includes a liquid crystal display panel 10, a backlight unit 20 disposed at a rear side of the liquid crystal display panel 10 while having a distance thereinbetween, a middle mold 30 supporting and allowing the liquid crystal display panel 10 and the backlight unit 20 to be spaced apart from each other, and a front sash 40 and a rear sash 50 disposed at a front side and a rear side of the liquid crystal display panel 10 and the backlight unit 20, respectively.

The liquid crystal display panel 10 includes a thin film transistor board 11 provided with a thin film transistor formed thereto, a color filter board 12 facing the thin film transistor board 11, and a liquid crystal layer (not shown) provided in between the thin film transistor board 11 and the color filter board 12.

The thin film transistor board 11 includes a flexible printed circuit board 13 having one side connected thereto, a driving chip 14 mounted at the flexible printed circuit board 13, and a panel circuit board 15 connected to the other side of the flexible printed circuit board 13.

The liquid crystal display panel 10 described above may form an image by adjusting an arrangement of the liquid crystal layer, but may not self-emit light, and thus an image may be displayed by only being supplied with a light from the backlight unit 20 positioned at a rear surface of the liquid crystal display panel 10.

The backlight unit 20 includes a plurality of optical sheets 21, 22, and 23 disposed at a rear side of the liquid crystal display panel 10, a light guiding member 24 positioned at a rear side of the plurality of optical sheets 21, 22, and 23, a reflection sheet 25 positioned at a lower surface of the light guiding member 24, and a light emitting diode module 26 to supply a light to the light guiding member 24. The plurality of optical sheets 21, 22, and 23 includes a protective film 21, a prism film 22, and a diffusion film 23.

The protective film 21 is disposed at a front side of the prism film 22 to protect the prism film 22 that is sensitive to a scratch, from dust.

The prism film 22 is provided with triangular prisms which are formed at a front surface thereof in a certain arrangement so that the light diffused from the diffusion film 23 may be collected in a vertical direction relative to a plane surface of the liquid crystal display panel 10 at a front side thereof. The prism film 22 is conventionally provided with two sheets thereof for use, and a microprism formed at each prism film 22 forms a predetermined angle. The light passed through the prism film 22 is mostly passed in a vertical manner, providing a uniform distribution of brightness.

The diffusion film 23 is provided with a coated layer having a shape of a bead on a base plate so that a light may be diffused from the light guiding member 24 to be supplied to the liquid crystal display panel 10.

The light guiding member 24 is formed with an acrylic-type resin such as a polymethyl methacrylate (PMMA) or a polymethylstyrene, and evenly supplies the light from the light emitting diode module 26 to the diffusion film 23. Here, a side surface of the light guiding member 24 facing the light emitting diode module 26 functions as an incidence plane through which the light emitted from the light emitting diode module 26 is incident, a front surface of the light guiding member 24 facing the diffusion film 23 functions as an emitting plane through which the light is emitted, and a rear surface provided at an opposite side of the emitting plane of the light guiding member 24 while facing the reflection sheet 25 functions as a reflecting plane to reflect the light.

The reflection sheet 25 is disposed at the reflecting plane provided at a rear side of the light guiding member 24, and guides the light emitted through a lower surface of the light guiding member 24 back to the light guiding member 24 again. The reflection sheet 25 may be formed with a plastic material such as polyethylene terephthalate (PET) or polycarbonate (PC).

The light emitting diode module 26 is provided with two portions thereof and disposed while facing two opposite side surfaces of among the four side surfaces of the light guiding member 24. The light emitting diode module 26 includes a plurality of light emitting diodes 261 disposed while facing the side surface of the light guiding member 24 to emit light, and a printed circuit board 262 provided with the plurality of light emitting diodes 261 disposed thereto and provided with a conductive pattern thereto to transmit an electrical signal to the plurality of light emitting diodes 261.

The plurality of light emitting diodes 261 is disposed in a way that an emitting plane, which is provided at a front surface of the plurality of light emitting diodes 261, faces the incidence plane, which is provided at a side surface of the light guiding member 24, and a rear end of the plurality of light emitting diodes 261 is connected to a printed circuit board 262.

The printed circuit board 262 is formed lengthwise along a side surface of the light guiding member 24, which the printed circuit board 262 faces, while having the same length as that of the side surface of the light guiding member 24. The plurality of light emitting diodes 261 may be disposed on the printed circuit board 262 in the longitudinal direction of the printed circuit board 262 while having a specific distance between each other.

The printed circuit board 262 serves to deliver a driving signal to the plurality of light emitting diodes 261, and also to transfer the heat generated at the plurality of light emitting diodes 261 to the outside. For such, the printed circuit board 262 includes a metal printed circuit board which is formed with a silicon steel sheet, a zinc galvanizing steel sheet, and an aluminum sheet having a high heat conductivity, and a rear surface of the printed circuit board 262 comes into close contact with a rear surface of the rear sash 50. Thus, the heat generated at the plurality of light emitting diodes 261 is transferred to the rear sash 50 through the printed circuit board 262 and dissipated at the rear sash 50.

The rear sash 50 includes a rear surface portion 51 at which the backlight unit 20 is placed, and a side surface portion 52 extended from a periphery of the rear surface portion 51. The rear sash 50 is formed with a heat-conductive metallic material, and dissipates the heat, which is transferred from the light emitting diode module 26 through the printed circuit board 262, into the air.

The printed circuit board 262 is provided therein with an accommodating groove 262b in a concaved manner in which at least one portion of an installation installed at the printed circuit board 262 is accommodated in order to prevent the at least one portion of the installation from protruding toward the light guiding member 24.

The installation is a fixing means. Put another way, the installation is a mounting arrangement. The installation is provided on the printed circuit board 262.

The accommodating groove 262b is formed through a press molding through a press processing in a process of the press processing, which is one of the processes in manufacturing the printed circuit board 262 formed with the metal printed circuit board.

The installation according to an exemplary embodiment includes a fastening member 60 for the printed circuit board 262 to be fixed to the rear sash 50. The fastening member 60 includes a fastening portion 62 provided with a male screw processed at an outer circumferential surface thereof, and a head portion 61 for an operator to easily rotate the fastening portion 62 and supported at the printed circuit board 262, and the printed circuit board 262 is provided with a first fastening hole 262a to which the fastening portion 62 is fastened. The accommodating groove 262b which has been described above is provided in a shape of a ring at an adjacent area of the first fastening hole 262a, and the head portion 61 of the fastening member 60 is accommodated in the accommodating groove 262b. Here, the accommodating groove 262b is provided with a depth equal to or greater than a thickness of the head portion 61 so that the head portion 61 is accommodated therein. That is to say, when installed the head portion 61 is flush with or beneath the front surface of the printed circuit board 262.

In addition, the rear sash 50 is provided at a position corresponding to the first fastening hole 262a with a second fastening hole 51a at which the fastening portion 62 is fastened.

Thus, in a state of the printed circuit board 262 being fixed to the rear sash 50 using the fastening member 60 as the fastening member 60 is fastened to the first fastening hole 262a and the second fastening hole 51a, the head portion 61 of the fastening member 60 is entirely accommodated at an inside the accommodating groove 262b, and thereby the head portion 61 of the fastening member 60 does not protrude from the printed circuit board 262. As such, when the head portion of the installation, that is, the head portion 61 of the fastening member 60 does not protrude from the printed circuit board 262, the light guiding member 24 may be directly supported on the printed circuit board 262 through the reflection sheet 25 that is attached at a rear surface of the light guiding member 24.

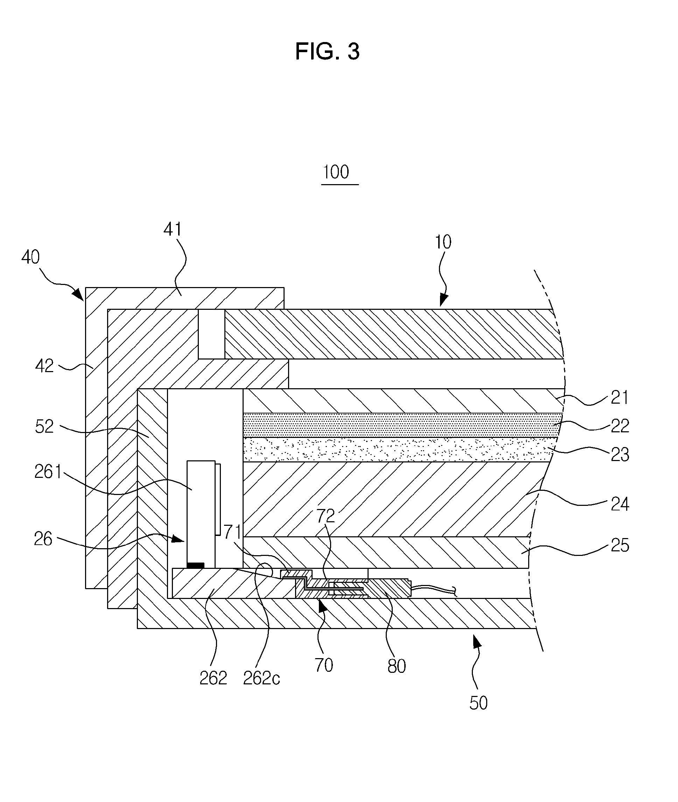

The fastening member 60 is suggested for the installation according to the exemplary embodiment, but the exemplary embodiment is not limited hereto, and as illustrated on FIG. 3, the display module 100 may be provided with a connector 70 serving as the installation installed at the printed circuit board 262 for the printed circuit board 262 to be connected to other components.

The connector 70 includes a connecting portion 71 for the connector 70 to be connected to the printed circuit board 262, and a connecting portion 72 to which a connecting terminal 80 extended from other components is connected.

The accommodating groove 262c according to an exemplary embodiment is formed in a way to be open in a side direction thereof while disposed at one side of the printed circuit board 262, and is formed while having a depth equal to or greater than a thickness of the connecting portion 71. In addition, the accommodating groove 262c is formed in an inclined surface so that a circuit may be formed on the surface that forms the accommodating groove 262c.

Thus, in a process of forming the printed circuit board 262, a circuit is formed on the surface of the accommodating groove 262c formed in an inclined surface and the connecting portion 71 of the connector 70 is installed at the accommodating groove 262c, and thereby the connecting portion 71 of the connector 70 is accommodated in the accommodating groove 262c, and thus the connecting portion 71 is not protruded from the printed circuit board 262. That is to say, the connecting portion 71 is flush with or beneath the front surface of the printed circuit board 262.

The fastening member 60 and the connector 70 are described as the installations in exemplary embodiments, but the installations of the inventive concept are not limited hereto, and other various installations may be installed in a state of being accommodated at an inside the accommodating groove 262c of the printed circuit board 262.

Although a few exemplary embodiments have been shown and described, it would be appreciated by those skilled in the art that changes may be made in these exemplary embodiments without departing from the principles and spirit of the inventive concept, the scope of which is defined in the claims and their equivalents.

## Claims

1. A display module, (100) comprising:
a printed circuit board (262);
a light emitting diode (26) disposed at one surface of the printed circuit board; and
an installation installed at the printed circuit board,
wherein the printed circuit board (262) is provided with an accommodating groove (262b; 262c) in which at least one portion of the installation is accommodated.

2. The display module (100) of claim 1, wherein the installation comprises a fastening member (60) having a fastening portion (62), which is provided with a male screw formed thereto and a head portion (61) configured to rotate the fastening portion (62),
the printed circuit board (262) comprises a fastening hole (262a) at which the fastening portion (62) is installed, and
the accommodating groove (262b) is provided at an adjacent area of the fastening hole (262a) in a concaved shape to accommodate the head portion (61).

3. The display module (100) of claim 2, wherein the accommodating groove (202b) is formed in a depth equal to or greater than a thickness of the head portion (61).

4. The display module (100) of claim 1, wherein the installation comprises a connector (70) having a connecting portion (71) that is to be connected to the printed circuit board, (262) and
the accommodating groove (262c) is open to a lateral side of the printed circuit board so as to have the connecting (71) portion installed thereon.

5. The display module (100) of claim 4, wherein the accommodating groove (262c) is formed in a depth equal to or greater than a thickness of the connecting portion (71).

6. The display module (100) of claim 4, wherein the accommodating groove (262c) is formed with an inclined surface, and a circuit is provided on the inclined surface such that the circuit is connected to the connector (70).

7. The display module (100) of claim 1, wherein the accommodating groove (262b) is provided in a concaved manner at one surface of the printed circuit board (262) at which the light emitting diode (261) is disposed.

8. The display module (100) of claim 1, wherein the printed circuit board (262) comprises a metal printed circuit board including a metallic material.

9. A display module (100), comprising:
a liquid crystal display panel (10),
a backlight unit (20) disposed at a rear side of the liquid crystal display panel (10), and
a front sash (40) and a rear sash (50) disposed at a front side of the liquid crystal display panel (10) and a rear side of the liquid crystal display panel, respectively,
wherein the backlight unit (20) comprises a light guiding member (24) disposed at a rear side of the liquid crystal display panel (10), a plurality of light emitting diodes (261) facing a side surface of the light guiding member (24), and a printed circuit board (262) at which the plurality of light emitting diodes (261) is disposed and which is fixed to the rear sash (50) through a fastening member (60),
the fastening member (65) comprises a fastening portion (62) provided with a male screw and a head portion (61) configured to rotate the fastening portion (62), and
the printed circuit board (262) comprising a first fastening hole (262a), at which the fastening portion (62) is fastened, and an accommodating groove (262b) provided at an adjacent area to the first fastening hole (262) and provided in a depth equal to or greater than a thickness of the head portion (61) so that the head portion is accommodated therein.

10. The display module (100) of claim 9, further comprising:
a reflection sheet (25) disposed at a rear surface of the light guiding member (24),
wherein the light guiding member is supported on the printed circuit board (262) through the reflection sheet (25).

11. A display module (100), comprising:
a liquid crystal display panel (10), and
a backlight unit (20) disposed at a rear side of the liquid crystal display panel (10),
wherein the backlight unit (20) comprises a light guiding member (24) disposed at a rear side of the liquid crystal display panel, a plurality of light emitting diodes (261) facing a lateral side of the light guiding member, and a printed circuit board (262) at which the plurality of light emitting diodes (261) is disposed and which is provided at one side thereof with a connector (70) installed for connection,
the connector (70) comprising a connecting portion (71) installed at the printed circuit board (262), and
the printed circuit board (262) comprising an accommodating groove (262) provided in a depth equal to or greater than a thickness of the connecting portion so that the connecting portion is accommodated therein.

12. The display module (100) of claim 11, wherein the accommodating groove (262c) is formed in an inclined manner to form a circuit that is connected to the connector (70).

13. The display module (100) of claim 11, further comprising:
a reflection sheet (25) disposed at a rear surface of the light guiding member,
wherein the light guiding member is supported on the printed circuit board through the reflection sheet (25).

14. A display module (100), comprising:
a printed circuit board (262) having light emitting diodes on a front surface and said printed circuit board (262) comprising an accommodating groove (262b, 262c) which accommodates an installation;
the installation being provided at the printed circuit board(262), and
a rear sash (50) disposed at a rear side of the display module,
wherein the installation connects the printed circuit board (262) and the rear sash (50) such that the installation is recessed from the front surface of the printed circuit board.

15. The display module (100) of claim 14, wherein the installation comprises a first portion (61) and a second portion (62), the first portion (61) being wider than the second portion (62), wherein the accommodating groove (262b) is formed in a depth equal to or greater than a thickness of the first portion (61), such that
the accommodating groove (262b) thereby accommodes the first portion (62).
